# EUROPEAN PATENT APPLICATION

(11) **EP 3 014 999 A1**
(43) Date of publication of application: **04.05.2016**
(21) Application number: 14191459.8
(22) Date of filing: 03.11.2014
(51) Int. Cl.: A23D 9/00, A23D 9/02, A23G 3/40, A23G 9/32, C11C 3/10, A23D 7/005, A23D 7/01, C11C 3/08, A23D 7/00, C11B 3/00

(54) **Interesterified oil composition**

(71) Applicant: Cargill, Incorporated, Wayzata, MN 55391 (US)
(72) Inventor: The designation of the inventor has not yet been filed
(74) Representative: Elseviers, Myriam

(57) **Abstract**

The present invention relates to an interesterified oil composition and a process for preparing such. It has solid fat content values of: from 50 to 70 % solids at 0°C, from 50 to 67% solids at 5°C, from 40 to 62% solids at 10°C, from 20 to 47% solids at 15°C, from 5 to 25% solids at 20°C, and from 0 to 5% solids at 25°C. It further relates to a food product selected from bakery products, confectionery, ice cream, dairy products, oil-in-water emulsions, water-in-oil emulsions, margarines, shortening, spreads, beverages, frozen ready-to-eat dishes, blends with animal fat, comprising food ingredients and 0.1 to 90 weight % of the oil composition according to present invention. In addition it relates to the use of oil composition for preparing food, feed, pharmacy, industrial products, personal care and cosmetics.

## Description

### Field of the Invention

The present invention relates to an interesterified oil composition and a process for preparing such.

### Background of the Invention

Consuming food is all about activities such as biting, chewing, appreciating changes in texture and mouth feel. There is a constant drive for innovation in the field of food products in order to balance the nutritional properties with the rheological properties and thus change the chemical, physical properties.

It would be desirable to have a simple oil composition that is suitable for a diversity of food and non-food applications.

The current invention provides such a product and process.

### Summary of the Invention

The current invention relates to an interesterified vegetable oil composition characterised in that it has solid fat content (SFC) values of:
a) from 50 to 70 % solids at 0°C,
b) from 50 to 67% solids at 5°C,
c) from 40 to 62% solids at 10°C,
d) from 20 to 47% solids at 15°C,
e) from 5 to 25% solids at 20°C, and
f) from 0 to 5% solids at 25°C.

It further relates to a process for preparing such an oil composition.

Furthermore, it relates to a food product selected from bakery products, confectionery, ice cream, dairy products, oil-in-water emulsions, water-in-oil emulsions, margarines, shortening, spreads, beverages, frozen ready-to-eat dishes, blends with animal fat, comprising food ingredients and 0.1 to 90 weight % of the oil composition according to the present invention, and the use of said oil composition for preparing food, feed, pharmacy, industrial products, personal care and cosmetics.

### Detailed Description

The current invention relates to an interesterified vegetable oil composition characterised in that it has solid fat content (SFC) values of:
g) from 50 to 70 % solids at 0°C,
h) from 50 to 67% solids at 5°C,
i) from 40 to 62% solids at 10°C,
j) from 20 to 47% solids at 15°C,
k) from 5 to 25% solids at 20°C, and
l) from 0 to 5% solids at 25°C.

The interesterified vegetable oil composition of the current invention is liquid at room temperature and above and is fast crystallising below 20°C. It can advantageously be used as a pumpable shortening in a certain temperature range (equal and below 20°C).

The solid fat content (SFC) is a measure for the cool-melting characteristics of the oil composition. The applied method corresponds to the AOCS method, ISO 8292:2007.

Interesterified oil designates an oil in which fatty acids positions in triglyceride molecules is changed by chemical or enzymatic process to modify triacylglycerols chemical, physical and/or nutritional properties. Interesterification can be conducted on a single oil or a mixture of different oils.

The current invention relates to an oil composition characterised by its SFC values and further in that the composition comprises lauric oil.

### Lauric oil.

Lauric oils are vegetable oils that mainly contain short and medium chain fatty acids (8:0 caprylic, 10:0 capric, 12:0 lauric, and 14:0 myristic acid). Lauric acid is dominant among these and oils of this type are called lauric oils. Two commodity oils fall into this category, i.e the tropical oils, palm kernel oil and coconut oil. Furthermore, lauric oils can be coconut oil, palm kernel oil or babassu and stearin fraction of palm kernel and coconut oil.

The current invention relates to an oil composition comprising either one of them or a mixture thereof, preferably it comprises as lauric oil, the coconut oil.

Preferably the oil composition is non-hydrogenated. The thus obtained non-hydrogenated interesterified vegetable oil composition contains a low amount of trans-fatty acids. The present invention relates to an oil composition that is containing less than 5%, preferably less than 2% and more preferably less than 1% of trans fatty acid. Most preferably the oil composition of the current invention is free of trans fatty acids.

Furthermore, the oil composition of the present application has a melting point of between 21.5 and 25.5°C. The melting point and the SFC of the oil composition will determine the applicability of the oil composition of the current invention.

The oil composition of the present invention is characterized in that it further comprises a non-lauric oil selected from the group consisting of rapeseed oil, canola oil, sunflower oil, high oleic sunflower oil, soybean oil, corn oil, peanut oil, walnut oil, hazelnut oil, olive oil, camelina oil, linseed oil, hemp oil, safflower oil, cottonseed oil and varieties of these oils having altered fatty acid compositions such as high oleic, low linolenic or low saturated oils (e.g. high oleic canola oil, low linolenic soybean oil or high stearic sunflower oil), and mixtures of one or more thereof.

The oil composition of the present invention is characterized in that the lauric oil is present in an amount of from 35 to 90 weight%. Typically oil compositions comprise 70% lauric oil and 30% non-lauric oil, or 80% lauric oil and 20% non-lauric oil, or 90% lauric oil and 10% non-lauric oil (wherein the % is weight %). Specific examples of oil compositions according to the present invention contain 70% coconut oil and 30% rapeseed oil; or 80% coconut oil and 20% rapeseed oil, or 90% coconut oil and 10% rapeseed oil (wherein the % is weight %).

Alternative specific examples of oil compositions according to the present invention, contain 60% rapeseed oil and 40% coconut oil, 65% rapeseed oil and 35% coconut oil and 50% rapeseed oil and 50% coconut oil.

The oil composition of the present invention is present with food ingredient in food products selected from bakery products, confectionery, ice cream, dairy products, oil-in-water emulsions, water-in-oil emulsions, margarines, shortening, spreads, beverages, frozen ready-to-eat dishes, blends with animal fat.

The current invention further relates to the use of the oil according to the present invention for preparing food, feed, pharmacy, industrial products, personal care and cosmetics.

The food is selected from bakery products, confectionery, ice cream, dairy products, oil-in-water emulsions, water-in-oil emulsions, margarines, shortening, spreads, beverages, frozen ready-to-eat dishes, blends with animal fat, comprising food ingredients and 0.1 to 90 weight % of the oil composition according to the present invention.

Furthermore, the current invention relates to margarine containing from 5 to 75% of oil composition of present invention.

Margarine is a flavoured food product made as a butter substitute. It is made by blending selected fats and oils with other ingredients to produce a table, cooking, or baking fat product that serves the purpose of dairy butter. Many different types of margarines are produced today, including regular, whipped, soft tub, liquid, diet, spread, no fat, restaurant, baker's and specialty products. Margarine typically contains emulsifiers to hold the fat and water phase together and these emulsifiers impart specific performance characteristics to the margarine. Mono-diglycerides are added to most margarines for emulsion stability or protection against weeping.

Shortening is a product containing up to 100% fat with the exception of puff-pastry and roll-in shortening that may contain moisture.

In a specific example, the spreads of the current invention comprise from 5 to 75% of the oil composition of the present invention. In addition to the oil composition, the spread may further contain some classical ingredients such as water, dairy components among which milk, cream, yoghurt and quark, emulsifiers among which monoglycerides, diglycerides, lecithins, polyglycerol polyricinoleate, organic acid esters and fatty acid polyglycerol esters, annatto or beta carotene, vitamin A, vitamin D, vitamin E, salt, citric acid, preservatives among which sorbic acid or its salts and EDTA, thickeners among which gelatine, starches and pectines, flavour agents, antioxidants such as tocopherols.

The oil composition of the current invention is particularly useful as topping fat layer in chilled or frozen dishes, such as frozen fish dishes. The oil composition of the current application is mixed with batter and herbs and provide a suitable topping fat layer on the chilled or frozen dishes.

Alternatively, the oil of the current composition can easily be mixed with milk fat and/or any other vegetable oil/fat and provides products with a specific crystallisation pattern. In a specific example the oil composition of the current invention can be mixed with vegetable oils/fats and milk fat from 5 to 95 weigh%.

The current invention relates to the process for preparing the interesterified vegetable oil composition according to the present invention, comprising the following steps:
a) Blending lauric oil with non-lauric oil for obtaining a crude oil blend
b) Interesterifying of blend,
c) Bleaching the interesterified blend
d) Deodorizing the bleached blend for obtaining the interesterified oil composition.

The interesterification is performed chemically or enzymatically. The chemical interesterification is applying sodium methylate. The chemical reaction is proceeding at a temperature from 90-110°C under vacuum for a reaction time of 30 minutes to hour.

The enzymatic interesterification occurs in presence of a lipase. It will ideally be immobilized on a silica support. A suitable immobilized enzyme is the Lyposzyme TL IM lipase from Novozymes. The reaction should be carried out at a defined temperature. This temperature will be choses with a number of factors in mind:
- The process will be preferably free of organic solvents and as such it should be performed at a temperature which guarantees that the oil composition remains in a liquid state;
- The temperature should be high enough to allow a high reaction rate, in turn will allow for shorter residence times;
- The temperature should be low enough to not affect the stability and activity of the enzyme.

Taking these factors into account, the skilled person will be able to determine the ideal reaction temperature. By way of example, a suitable temperature range can be from 70-90°C.

### Bleaching

The nature and operation of the bleaching system will depend, at least in part, on the nature and quality of the oil being bleached. Generally, the oil will be mixed with a bleaching agent which combines with oxidation products, trace phosphatides, trace soaps, and other compounds adversely affecting the colour and flavour of the oil. As is known in the art, the nature of the bleaching agent can be selected to match the nature of the oil to yield a desirable bleached oil. Bleaching agents generally include natural or "activated" bleaching clays, also referred to as "bleaching earths", activated carbon and various silicates. A skilled person will be able to select a suitable bleaching agent from those that are commercially available.

### Deodorising

The bleached oil must undergo a physical refining step referred to as "deodorising". The deodorising process and its many variations and manipulations are well known in the art. Preferably, it will include introducing the oil into a deodoriser and contacting it with steam to vaporize and drive off free fatty acids and other volatile impurities, resulting in a deodorised oil and a vapour stream.

The deodoriser may be any of a wide variety of commercially available deodorizing systems, including both multi-chamber deodorisers (such as those sold by Krupp of Hamburg, Germany; De Smet Group, S.A. of Brussels, Belgium; Gianazza Technology s.r.l. of Legnano, Italy; Alfa Laval AB of Lund, Sweden, or others) and multi-tray deodorisers (such as those sold by Krupp, DeSmet Group, S.A., and Crown Ironworks of the United States).

The deodoriser is desirably maintained at an elevated temperature and a reduced pressure to better volatilise the FFAs and other volatile impurities. The precise temperature and pressure may vary depending on the nature and quality of the oil being processed. According to one possible embodiment of the invention, the deodoriser will be maintained at a pressure of no greater than 10 mm Hg. Preferably, it will be maintained at a pressure of no greater than 5 mm Hg, e.g., 1-4 mm Hg.

The temperature in the deodoriser may be varied as desired to optimize the yield and quality of the deodorised oil. At higher temperatures, reactions which may degrade the quality of the oil will proceed more quickly. For example, at higher temperatures, cis-fatty acids may be converted into their less desirable trans form. Operating the deodorizer at lower temperatures may minimize the cis-to-trans conversion, but will generally take longer to remove the requisite percentage of volatile impurities. For most vegetable oils, maintaining the oil at a temperature of 200°C or higher should suffice. In many circumstances, an oil temperature of about 230-285°C is suitable, with temperatures of about 240-270°C being useful for many oils.

The product exiting the deodorized is the interesterified oil composition of the present invention.

## Claims

1. Interesterified vegetable oil composition **characterised in that** it has solid fat content values of:
a) from 50 to 70 % solids at 0°C,
b) from 50 to 67% solids at 5°C,
c) from 40 to 62% solids at 10°C,
d) from 20 to 47% solids at 15°C,
e) from 5 to 25% solids at 20°C, and
f) from 0 to 5% solids at 25°C.

2. The oil composition according to claim 1 **characterised in that** the composition comprises lauric oil.

3. The oil composition according to claim 1 and 2 **characterised in that** the oil composition has a melting point of between 21.5 and 25.5°C.

4. The oil composition according to any one of claims 1 to 3 **characterized in that** it further comprises a non-lauric oil selected from the group consisting of rapeseed oil, canola oil, sunflower oil, high oleic sunflower oil, soybean oil, corn oil, peanut oil, walnut oil, hazelnut oil, olive oil, camelina oil, linseed oil, hemp oil, safflower oil, cottonseed oil and varieties of these oils having altered fatty acid compositions such as high oleic, low linolenic or low saturated oils (e;g. high oleic canola oil, low linolenic soybean oil or high stearic sunflower oil), and mixtures of one or more thereof.

5. The oil composition according to any one of claims 1 to 4 **characterized in that** the lauric oil is present in an amount of from 35 to 90 weight%.

6. Food product selected from bakery products, confectionery, ice cream, dairy products, oil-in-water emulsions, water-in-oil emulsions, margarines, shortening, spreads, beverages, frozen ready-to-eat dishes, blends with animal fat, comprising food ingredients and 0.1 to 90 weight % of the oil composition according to any one of claims 1 to 5.

7. Use of oil composition according to anyone of claims 1 to 5 for preparing food, feed, pharmacy, industrial products, personal care and cosmetics.

8. Use according to claim 13 wherein the food is selected from bakery products, confectionery, ice cream, dairy products, oil-in-water emulsions, water-in-oil emulsions, margarines, shortening, spreads, beverages, frozen ready-to-eat dishes, blends with animal fat.

9. Margarine containing from 5 to 75% of oil composition according to any one of claims 1 to 5.

10. Process for preparing the interesterified vegetable oil composition according to any one of claims 1 to 5, comprising the following steps:
a) Blending lauric oil with non-lauric oil for obtaining a crude oil blend
b) Interesterifying of blend,
c) Bleaching the interesterified blend
d) Deodorizing the bleached blend for obtaining the interesterified oil composition.
